(19) **Europäisches Patentamt**

**European Patent Office**

**Office européen des brevets**

(11) Veröffentlichungsnummer: **0 216 061**

**A1**

(12) # EUROPÄISCHE PATENTANMELDUNG

(21) Anmeldenummer: 86110024.6

(51) Int. Cl.4: **A01D 34/64** , A01D 69/00

(22) Anmeldetag: 22.07.86

(30) Priorität: 26.08.85 US 769296

(43) Veröffentlichungstag der Anmeldung:
01.04.87 Patentblatt 87/14

(84) Benannte Vertragsstaaten:
DE FR GB

(71) Anmelder: **DEERE & COMPANY**
**1 John Deere Road**
**Moline Illinois 61265(US)**

(72) Erfinder: **Hutchison, Wayne Robert**
**Route 2 Box 369C**
**Mayville Wisconsin 53050(US)**

(74) Vertreter: **Sartorius, Peter et al**
**DEERE & COMPANY European Office, Patent**
**Department Postfach 503 Steubenstrasse**
**36-42**
**D-6800 Mannheim 1(DE)**

(54) **Antriebsvorrichtung für Erntemaschinen.**

(57) Eine Antriebsvorrichtung für einen Gartenschlepper ist mit einem stufenlos einstellbaren Zugmittelgetriebe (67) ausgestattet, das zum Fahrantrieb
des Gartenschleppers dient. Hierzu ist zwischen der
Antriebsachse (29) der Laufräder und dem Zugmittelgetriebe (67) ein auf Vorwärts-und Rückwärtsfahrt
einstellbares Getriebe (27) vorgesehen. Das Getriebe
(27) sowie das Zugmittelgetriebe lassen sich durch
einen einzelnen Stellhebel (44) betätigen und somit
einmal das Getriebe (27) schalten und zum anderen
die Fahrtgeschwindigkeit regeln.

**FIG. 3**

## Antriebsvorrichtung für Erntemaschinen

Die Erfindung bezieht sich auf eine Antriebsvorrichtung für ein Fahrzeug, insbesondere Gartenschlepper, mit einer auf einem Rahmen des Fahrzeuges vorgesehenen Verbrennungskraftmaschine zum Antrieb eines Getriebes, insbesondere Differentialgetriebes, für die Laufräder und mit mindestens einem stufenlos einstellbaren, mit dem Getriebe antriebsverbundenen Zugmittelgetriebe sowie mit einem ersten Stellorgan zur Schaltung des Getriebes, einem zweiten Stellorgan zur Beeinflussung des Zugmittelgetriebes und einer über ein Bremsstellorgan betätigbaren Bremse.

Es ist bereits eine Antriebsvorrichtung für einen Gartenschlepper bekannt (US-A-3 477 439), die aus einem Getriebe zum Antrieb der Laufräder und einem mit diesem antriebsverbundenen, stufenlos einstellbaren Zugmittelgetriebe besteht, das über eine Verbrennungskraftmaschine angetrieben wird. Das Getriebe läßt sich durch einen Schalthebel verstellen, so daß die Laufräder entweder ab- oder zugeschaltet werden können. Der Motor läßt sich ferner über einen zusätzlichen Stellhebel in seiner Stellkraft beeinflussen. Das stufenlos einstellbare Getriebe weist eine Doppelriemenscheibe auf, die in einer Führung mittels eines Pedals entsprechend verstellbar ist, um somit die Geschwindigkeit des Gartenschleppers zu verändern. Ein weiteres Pedal dient zur Bremsung der Getriebedrehzahl. Eine derartige Antriebsvorrichtung ist wegen der vielen Schaltelemente aufwendig und teuer und umständlich zu bedienen.

Demgegenüber liegt der Erfindung die Aufgabe zugrunde, die Antriebsvorrichtung mit den zugehörigen Schaltorganen derart auszubilden und anzuordnen, daß bei einer gleichzeitigen Verbesserung des Bedienungskomforts mit einem Minimum an Schaltelementen ausgekommen werden kann. Diese Augabe ist durch die im kennzeichnenden Teil des Anspruches 1 aufgeführten Merkmale gelöst. Durch die vorteilhafte Ausbildung der Antriebsvorrichtung läßt sich auf einfache Weise mit einem Minimum an Schaltteilen und einem einzigen Stellorgan das Getriebe für unterschiedliche Antriebsvarianten einstellen und unabhängig davon auch die Fahrtgeschwindigkeit des Fahrzeuges bzw. des Gartenschleppers regeln. Hierzu ist in vorteilhafter Weise das Stellorgan auf einem quer zu Fahrtrichtung verlaufenden Gestänge angeordnet, das über entsprechende Schaltorgane mit dem Getriebe bzw. über weitere Schaltorgane mit dem Zugmittelgetriebe verbunden ist. In vorteilhafter Weise ist dabei das Stellorgan mittels einer Nockenscheibe geführt, so daß einmal lediglich das Getriebe über das Stellorgan und bei einem bestimmten Stellweg des Stellorganes lediglich das Zugmittelgetriebe beeinflußt werden.

Um eine Verstellung der zum Zugmittel gehörigen einstellbaren Zugmittelscheibe zu erreichen, ist das Stellorgan bzw. der Stellhebel über ein entsprechendes Stellorgan mit dem Tragarm zur Aufnahme einer Spannrolle verbunden, die jeweils so verstellbar ist, daß sich der wirksame Durchmesser der Zugmittelscheibe entweder vergrößert oder verkleinert und somit entsprechend die Antriebsgeschwindigkeit für die Laufräder des Fahrzeuges bzw. des Gartenschleppers. Der Tragarm ist auf einer quer verlaufenden Welle - schwenkbar angeschlossen und über eine Spielverbindung mit dem Stellhebel mittel-bzw. unmittelbar verbunden, so daß bei einer Verstellung des Getriebes über den Stellhebel das stufenlos einstellbare Zugmittelgetriebe unbeeinflußbar bleibt und sich erst dann verstellen läßt, wenn der Schalthebel auf Vorwärtsfahrt eingestellt ist. Hierzu ist der Stellhebel mit einer Nockenscheibe verbunden, die auf dem quer verlaufenden Gestänge angeordnet ist. Die Nockenscheibe weist zwei Kurvenabschnitte auf, wobei der eine Kurvenabschnitt konzentrisch und der andere exzentrisch zur Welle des Stellhebels angeordnet ist. Der exzentrisch angeordnete Kurvenabschnitt dient zur Führung eines am Gestänge angeordneten Nockens, so daß bei Nutzung dieses Kurvenabschnittes das Getriebe sich auf Vorwärtsfahrt, Neutralstellung und Rückwärtsfahrt einstellen kann. Verläßt der Nocken diesen Kurvenabschnitt und gelangt in den konzentrischen Kurvenabschnitt, so läßt sich mit dem gleichen Stellhebel das stufenlos einstellbare Getriebe mittels des Tragarmes beeinflussen und somit auch die Geschwindigkeit verändern. Soll die Fahrt unterbrochen werden, so braucht lediglich das mit dem Kupplungspedal verbundene längenveränderliche Gestänge verstellt werden, das ebenfalls an der Welle angreift, auf der der Tragarm angeordnet ist. Wird das Kupplungspedal heruntergedrückt, so wird kurzfristig die Fahrtgeschwindigkeit verlangsamt bzw. auf Null heruntergedrosselt, bis das Kupplungspedal wieder losgelassen wird. Danach stellt sich die ursprünglich eingestellte Geschwindigkeit wieder ein. Hierdurch erhält man mit wenigen baulichen Mitteln eine einwandfreie und zuverlässige Steuerung der Antriebsvorrichtung für den Gartenschlepper. Um beispielsweise das Fahrzeug bzw. den Gartenschlepper abzubremsen, ist ein Bremspedal über ein entsprechendes Bremsgestänge mit dem Getriebe verbunden, so daß das Getriebe und somit die Laufräder des Fahrzeuges abgebremst werden können. Die Bremse arbeitet in vorteilhafter Weise unabhängig von dem Stellhebel und dem damit verbundenen Gestänge.

Das erste Schaltgestänge ist in vorteilhafter Weise über eine Spielverbindung mit dem Tragarm zur Aufnahme der Spannrolle verbunden, so daß bei einer Verstellung des Stellhebels zur Schaltung des Getriebes der Tragarm nicht mitverschwenkt wird, solange der Nocken in dem exzentrisch angeordneten Kurvenabschnitt der Nockenscheibe geführt wird. Eine Verstellung des Getriebes erhält man durch die Verbindung eines Schaltgestänges, das einenends an das Getriebe und anderenends an das Gestänge gelenkig angeschlossen ist, das am oberen Ende den in der Nockenscheibe geführten Nocken aufweist.

Das mit dem Stellhebel verbundene Gestänge, das über ein weiteres Schaltgestänge und eine Spielverbindung mit dem Tragarm zur Aufnahme der Umlenkrolle verbunden ist, läßt sich genau so einstellen, daß Fertigungstoleranzen innerhalb der Antriebsvorrichtung ohne weiteres ausgeglichen werden können.

Im folgenden wird die Erfindung anhand von lediglich einen Ausführungsweg darstellenden Zeichnungen näher erläutert. Es zeigt:

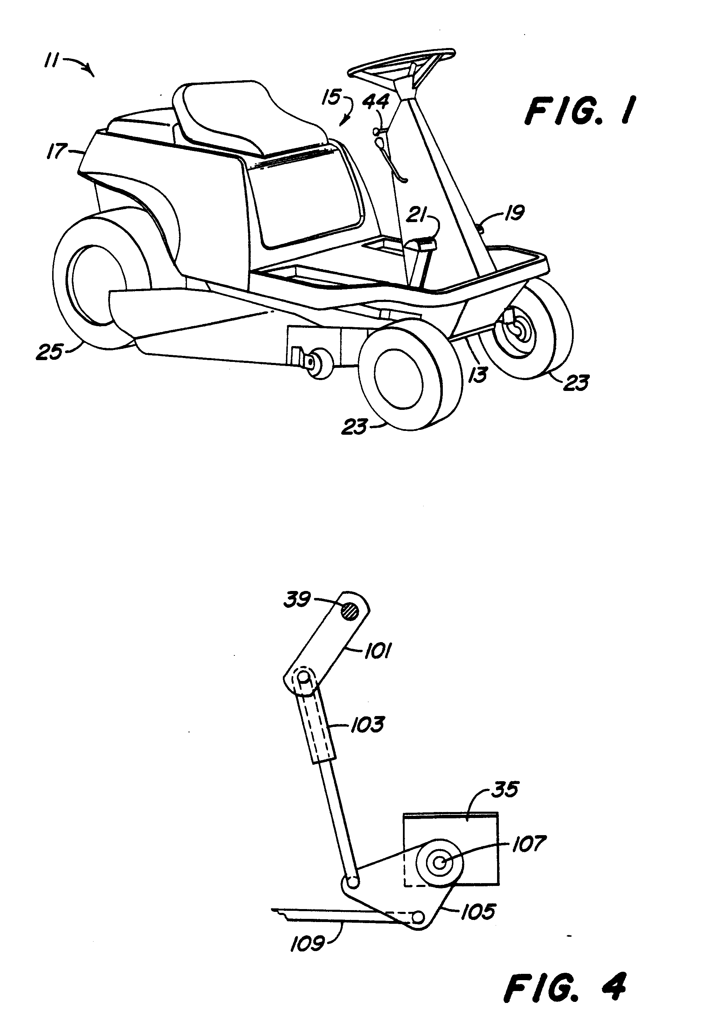

Fig. 1 eine perspektivische Darstellung eines Gartenschleppers,

Fig. 2 eine Seitenansicht des Steuersystems,

Fig. 3 eine Draufsicht des Steuersystems,

Fig. 4 eine Seitenansicht des Steuersystems in der Ansicht entlang der Linie 4 -4.

In der Zeichnung ist mit 11 ein Gartenschlepper bezeichnet, der aus einem Hauptrahmen 13 mit einem Fahrersitz 15 und einer Motorhaube 17 besteht. Unterhalb der Motorhaube 17 befindet sich eine in der Zeichnung nicht dargestellte Verbrennungskraftmaschine. Im Bereich des Fahrersitzes 15 sind ein Kupplungspedal 19 und ein Bremspedal 21 angeordnet. Ferner sind an dem Hauptrahmen 13 vordere steuerbare Laufräder 23 sowie hintere antreibbare Laufräder 25 angeordnet.

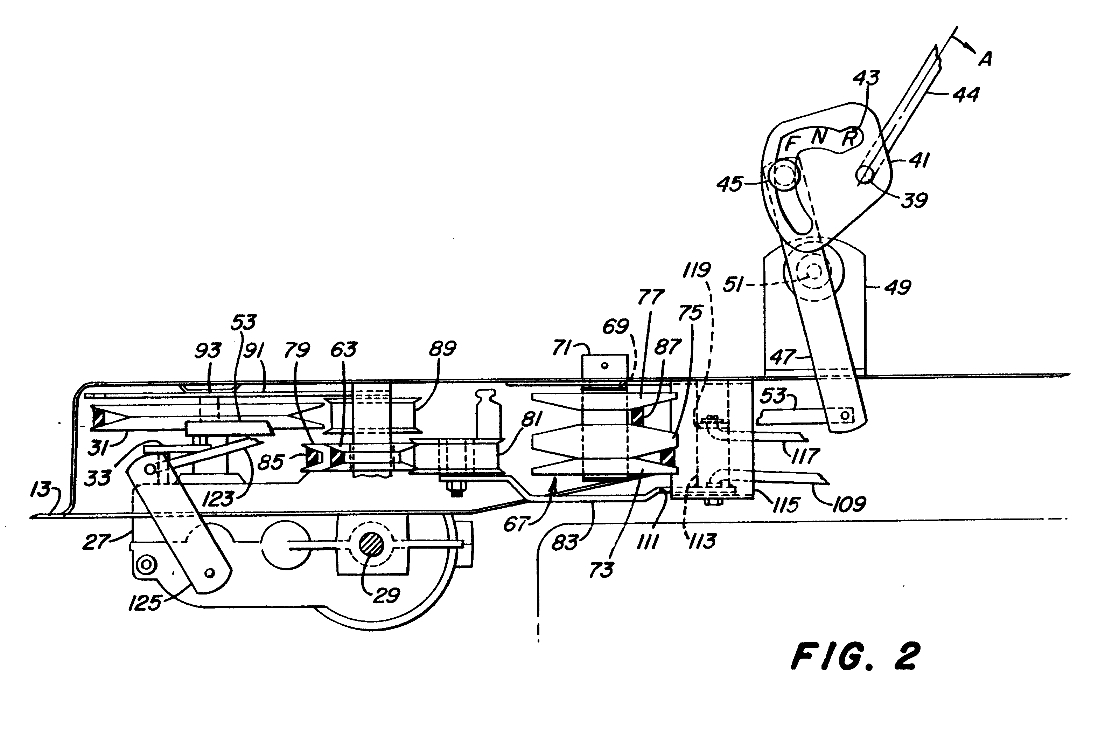

Wie aus Fig. 2 hervorgeht, weist der Hauptrahmen 13 ein Differentialgetriebe 27 auf, das Bestandteil eines unterhalb des Rahmens vorgesehenen Getriebegehäuses und einer Bremse ist. Das Differentialgetriebe 27 ist mit einer Eingangsriemenscheibe 31 ausgerüstet, die Bestandteil eines Zugmittelgetriebes ist. Beiderseits des Differentialge triebes 27 befindet sich eine Antriebsachse 29, an denen die Laufräder 25 angeordnet sind. Das Differentialgetriebe 27 ist mit einem Stellhebel 33 ausgestattet, mittels dessen das Differentialgetriebe auf R = Rückwärtsfahrt, N = Neutralstellung und F = Fahrt (vorwärts) eingestellt werden kann.

Wie aus Fig. 2 hervorgeht, sind an dem Hauptrahmen 13 Tragelemente 34 und 37 vorgesehen, beispielsweise angeschweißt. Die Tragelemente 34 und 37 dienen zur schwenkbaren Aufnahme einer Welle 39, so daß sich die Welle 39 unterhalb des Rahmens 13 und quer zur Fahrtrichtung erstrecken kann. An der Welle 39 ist eine Nockenscheibe 41 mit einer Nockenführung bzw. einem Nockenschlitz 43 sowie ein Stellhebel 44 angeschlossen. In dem Schlitz bzw. in der Nockenführung 43 ist ein Nocken bzw. ein Nockenbolzen 45 geführt, der an einem Gestänge 47 gelenkig bzw. drehbar angeschlossen ist. Das Gestänge 47 ist an einer Tragvorrichtung 49 mittels eines Gelenkes 51 - schwenkbar angeschlossen, wobei die Tragvorrichtung 49 auf dem Rahmen 13 befestigt ist. Am anderen bzw. unteren Ende des Gestänges 47 ist mittels eines Gelenkbolzens ein Gestänge 53 - schwenkbar angeschlossen. Das Gestänge 53 ist ferner mit einem Stellhebel 33 des Differentialgetriebes 27 gelenkig verbunden. Durch Verschwenkung der Nockenscheibe 41 mittels des Stellhebels 44 wird der Nocken 45 mittels der Nockenführung 43 verstellt bzw. verschwenkt und dabei in die Positionen F, N oder R bewegt. Eine Verstellung des Nockens 45 hat eine Verstellung des Gestänges 53 und somit des Stellhebels 3 in die entsprechenden Stellungen F, N oder R zur Folge, so daß hierdurch eine entsprechende Einstellung am Differentialgetriebe 27 vorgenommen werden kann.

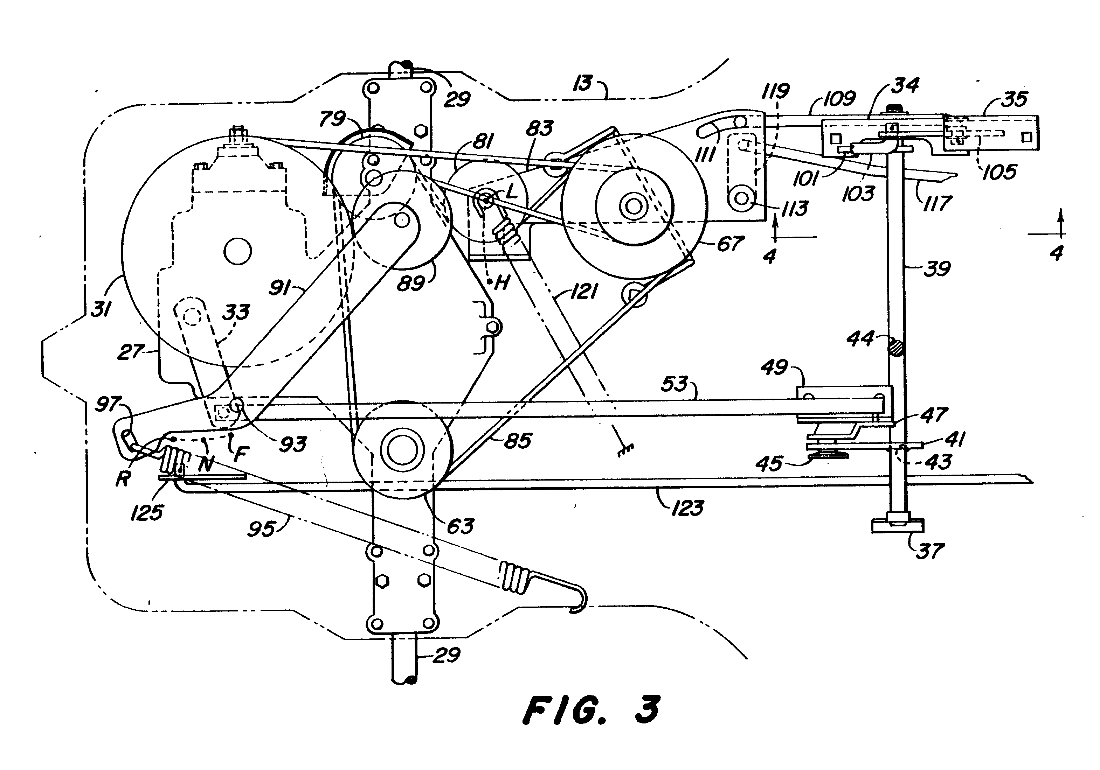

Wird beispielsweise das Differentialgetriebe 27 auf Vorwärts-bzw. Rückwärtsfahrt eingestellt, so wird auf die Eingangsscheibe 31 ein Drehmoment übertragen und somit auf das Zugmittelgetriebe und die dazugehörigen Antriebsele mente. Wie aus Fig. 3 hervorgeht, wird über die Verbrennungskraftmaschine eine Zugmittelscheibe 63 angetrieben, die wiederum ein stufenlos einstellbares Zugmittelgetriebe 67 antreibt. Das stufenlos einstellbare Zugmittelgetriebe 67 weist eine Achse 69 auf, die sich durch den Rahmen 13 erstreckt und mittels einer Mutter 71 am Rahmen 13 befestigt ist. Auf der Achse 69 ist eine erste axial nicht einstellbare Zugmittelscheibenhälfte 73 angeordnet sowie eine axial einstellbare Doppelscheibe 75 und eine dritte ebenfalls axial nicht verstellbare Zugmittelscheibenhälfte 77. Die Doppelscheibenhälfte 75 lagert auf der Achse 69 zwischen den beiden Zugmittelscheibenhälften 73 und 77. Zu dem Zugmittelgetriebe 67 gehört eine Umlenkrolle 79, die am Getriebegehäuse des Differentialgetriebes 27 drehbar gelagert ist. Ferner ist dem Zugmittelgetriebe 67 eine Spannrolle 81 zugeordnet, die auf einem Tragarm 83 drehbar gelagert ist. Um die Zugmittelscheibe 63, die Umlenkrolle 79 und die Spannrolle 81 ist ein Zugmittelriemen 85 geführt. Der Zugmittelriemen 85 ist, wie aus Fig. 2 hervorgeht, zwischen der Doppelscheibe 75 und der Zugmittelscheibenhälfte 73 angeordnet. Ein weiterer Zugmittelriemen 87 steht mit der Zugmittelscheibe 67, der Eingangsscheibe 31 und einer zweiten Umlenkrolle 89 in Antriebsverbindung. die Umlenkrolle 89 ist an einem Ende eines V-förmig ausgebildeten Tragarmes 91 angeordnet, der an dem Rahmen 13 mittels eines Gelenkbolzens 93 schwenkbar angeschlossen ist. Eine Zugfeder 65 ist einenends an einer Schlitzöffnung 97, die in dem Tragarm 91 vorgesehen ist, anderenends am Rahmen 13 befestigt.

Die von der Verbrennungskraftmaschine angetriebene Zugmittelscheibe 63 treibt über den Zugmittelriemen 85 das Zugmittelgetriebe 67 und somit die Spannrolle 81 und die Umlenkrolle 79 an. Das Zugmittelgetriebe 67 steht ferner über die Umlenkrolle 89 und den Zugmittelriemen 87 mit der Eingangsscheibe 31 in Antriebsverbindung. Wird die Drehzahl der Eingangsscheibe 31 verändert, so wird auch dementspre chend proportional die Fahrtgeschwindigkeit des Gartenschleppers verändert. Um also die Geschwindigkeit der Eingangsscheibe 31 für Vorwärtsfahrt (F) zu verändern, ist ein Gestänge 101 (siehe Fig. 4) mit der Welle 39 fest verbunden. Anderenends greift das Gestänge 101 gelenkig an einem längenveränderlichen Gestänge 103 an. Das längenveränderliche Gestänge 103 ist wiederum gelenkig an eine Übertragungsplatte 105 angeschlossen, die mittels eines Gelenkbolzens 107 an das Tragelement 35 angeschlossen ist. Das Gestänge 109 ist einenends ferner an die Übertragungsplatte 105 gelenkig angeschlossen und anderenends in einem Schlitz 111 des Tragarmes 83 verschiebbar aufgenommen. Der Tragarm 83 ist fest mit einer kurzen Welle 113 verbunden, die drehbar in einer Halterung 115 aufgenommen ist. Die Halterung 115 ist an dem Rahmen 13 angeordnet bzw. an diesem fest verschweißt. Wird beispielsweise der Stellhebel 44 gemäß Pfeil A nach vorne verschwenkt, so werden über die Welle 39 auch die Gestänge 101 und 103 verstellt und verschwenken somit die Übertragungsplatte 105, die wiederum das Gestänge 109 verstellt. Das einenends in den Schlitz 111 aufgenommene Gestänge 109 bewirkt wiederum eine Verschwenkung bzw. Verstellung des Tragarmes 83. Die Verschwenkung des Tragarmes 83 bewirkt wieder eine Verstellung der Spannrolle 81 und vergrößert oder verkleinert damit die Zugspannung des Zugmittelriemens 85, der eine Einstellung am Zugmittelgetriebe 67 bewirkt, so daß dann die Drehzahl des Zugmittelgetriebes entsprechend vergrößert oder verkleinert wird. Der Tragarm 83 kann auf einem Bogen verschwenkt werden, und zwar zwischen einer Stellung L (niedrige Geschwindigkeit) und einer Stellung H (hohe Geschwindigkeit). An dem Tragarm 83 greift eine Feder 121 an, die bewirkt, daß der Tragarm 83 bzw. der Zugmittelriemen 85 einer konstanten Spannung ausgesetzt ist, und zwar in Richtung auf eine - schnelle Geschwindigkeit. Eine mit Raststellen versehene, jedoch nicht dargestellte Arretierungsplatte dient zur wahlweisen Feststellung des Stellhebels 44. Die Getriebekupplung ist auf entsprechende Weise mit dem Differentialgetriebe 27 verbunden, wenn der Stellhebel 33 beispielsweise von der Vorwärtsstellung (F) in die Rückwärtsstellung (R) verstellt wird.

Wird beispielsweise das Kupplungspedal 19 nach unten gedrückt, so wird die Geschwindigkeit des Gartenschleppers 11 herabgesetz. Der Gartenschlepper 11 erreicht wieder seine zuvor eingestellte Geschwindigkeit, wenn das Kupplungspedal 19 losgelassen wird, so daß es dann wieder zurückschwenken kann, das hierzu mit dem Kupplungsgestänge 117 gelenkig verbunden ist, das gelenkig an einem Hebel 119 angreift, der fest mit der Welle 113 verbunden ist. Ist beispielsweise das Kupplungspedal 19 nach unten gedrückt, so bewirkt es über das Kupplungsgestänge 117 eine Verstellung der Welle 113, die dann den Hebel 119 verschwenkt. Eine Drehung der Welle 113 bewirkt eine Verstellung bzw. Verschwenkung des Tragarmes 83 in eine niedrigere Geschwindigkeitsstufe, wobei hierzu die Spannrolle 81 so verstellt wird, daß die Zugmittelspannung vermindert wird. Der Schlitz 111 gestattet, daß das Gestänge 109 endseitig in dem Schlitz verschoben wird. Das Loslassen des Kupplungspedals 19 bewirkt, daß die Feder 121 den Tragarm 83 in die anfangs eingestellte Geschwindigkeitsposition gegen das Gestänge 109 drückt.

Ein Abbremsen des Gartenschleppers erfolgt durch Drücken des Bremspedals 21, das hierzu gelenkig mit dem Bremsgestänge 123 verbunden ist, das wiederum gelenkig mit einem Bremshebel 125 des Differentialgetriebes 127 verbunden ist.

## Ansprüche

1. Antreibsvorrichtung für ein Fahrzeug, insbesondere Gartenschlepper, mit einer auf einem Rahmen (13) des Fahrzeuges vorgesehenen Verbrennungskraftmaschine zum Antrieb eines Getriebes, insbesondere Differentialgetriebes (27), für die Laufräder (25) und mit mindestens einem stufenlos einstellbaren, mit dem Getriebe antriebsverbundenen Zugmittelgetriebe (67) sowie mit einem ersten Stellorgan (44) zur Schaltung des Getriebes, einem zweiten Stellorgan (Kupplungspedal 19) zur Beeinflussung des Zugmittelgetriebes (67) und einer über ein Bremsstellorgan (21) betätigbaren Bremse, dadurch gekennzeichnet, daß auf dem Rahmen (13) mindestens eine quer zur Fahrtrichtung verlaufende Welle (39) zur Aufnahme des ersten Stellorgans (44) drehbar gelagert ist, das mittels einer Nockenscheibe (41) geführt ist, und daß an die quer verlaufende Welle (39) ein erstes Schaltgestänge (109) zur Geschwindigkeitsregelung des Zugmittelgetriebes und ein zweites Schaltgestänge (53) zur Schaltung des Getriebes (27) gelenkig angeschlossen ist.

2. Antriebsvorrichtung nach Anspruch 1, dadurch gekennzeichnet, daß das Getriebe (27) über ein erstes stufenlos einstellbares, mit der Verbrennungskraftmaschine antriebsverbundenes Getriebe angetrieben wird, das mit einem zweiten stufenlos einstellbaren Getriebe (67) antriebsverbunden ist, das eine an einem Tragarm (83) drehbar gelagerte Spannrolle (81) aufweist, wobei der Tragarm (83) über das als Stellhebel (44) ausgebildete erste Stellorgan und das als Kupplungspedal - (19) ausgebildete zweite Stellorgan verschwenkbar ist.

3. Antriebsvorrichtung nach Anspruch 1 und 2, dadurch gekennzeichnet, daß der Stellhebel (44) über eine in der Nockenscheibe (41) vorgesehene Nockenführung (43) zur Aufnahme eines an einem Gestänge (47) angeordneten Nokkens (45) und über die quer verlaufende Welle (39) mit dem Tragarm (83) des zweiten Zugmittelgetriebes und über die Welle (39) mit dem an das Getriebe (27) angeschlossenen zweiten Schaltgestänge (53) verbunden ist.

4. Antriebsvorrichtung nach Anspruch 3, dadurch gekennzeichnet, daß die Nockenführung - (43) einen ersten in etwa exzentrisch zur ersten Welle (39) verlaufenden Kurvenabschnitt zur Verstellung des Getriebes in eine Fahr-, Neutral-und Rückwärtsstellung sowie einen konzentrisch zur Welle (39) angeordneten zweiten Kurvenabschnitt aufweist, der den Nocken (45) dann aufnimmt, wenn über den Stellhebel (44) das Zugmittelgetriebe zur Veränderung der Fahrtgeschwindigkeit verstellt wird.

5. Antriebsvorrichtung nach Anspruch 4, dadurch gekennzeichnet, daß das Gestänge (47) einenends den in der Nockenführung (43) beweglich bzw. verschiebbar aufgenommenen Nocken - (45) aufweist und anderenends mit dem an ein Stellorgan des Getriebes (27) gelenkig angeschlossenen Schaltgestänge (53) gelenkig verbunden ist, wobei das Gestänge (47) zwischen der Anschlußstelle des Schaltgestänges (53) und der Lagerstelle des Nokkens (45) am Gestänge (47) mittels eines Gelenkbolzens (51) auf dem Rahmen (13) schwenkbar gelagert ist.

6. Antriebsvorrichtung nach Anspruch 3, dadurch gekennzeichnet, daß der Nocken (45) am Gestänge (47) drehbar gelagert ist.

7. Antriebsvorrichtung nach einem oder mehreren der vorherigen Ansprüche, dadurch gekennzeichnet, daß der Stellhebel (44) an ein Gestänge - (103) gelenkig angeschlossen ist, das mit einer auf dem Rahmen (13) schwenkbar gelagerten Übertragungseinrichtung (105) gelenkig verbunden ist, die an das erste Schaltgestänge (109) gelenkig angeschlossen ist.

8. Antriebsvorrichtung nach Anspruch 1 und 7, dadurch gekennzeichnet, daß das erste Schaltgestänge (109) einenends über eine Spielverbindung mit dem die Spannrolle (81) des zweiten Zugmittelgetriebes aufnehmenden Tragarm (83) verbunden ist, der auf dem Fahrzeug schwenkbar gelagert ist, wobei die Spannrolle (81) mittels eines Federelementes (121) gegen das Zugmittel des Zugmittelgetriebes gedrückt wird, wobei durch entsprechende Anlage der Spannrolle die zugehörige und einstellbare Zugmittelscheibe (75, 77) des Zugmittelgetriebes in ihrem wirksamen Durchmesser zur Veränderung der Antriebsgeschwindigkeit verändert werden kann.

9. Antriebsvorrichtung nach einem oder mehreren der vorherigen Ansprüche, dadurch gekennzeichnet, daß der Tragarm (83) mit einer auf dem Rahmen (13) drehbar gelagerten Welle (113) fest verbunden ist, auf dem ein zusätzlicher Hebel - (119) zum gelenkigen Anschluß eines mit dem Kupplungspedal (19) gelenkig verbundenen Kupplungsgestänges (117) befestigt ist.

10. Antriebsvorrichtung nach Anspruch 4, dadurch gekennzeichnet, daß das erste Schaltgestänge (109) einenends in einem als Spielverbindung ausgebildeten Schlitz geführt ist, der in etwa so lang ist wie der erste exzentrische Kurvenabschnitt (Schlitz 43) der Nockenscheibe (41).

11. Antriebsvorrichtung nach einem oder mehreren der vorherigen Ansprüche, dadurch gekennzeichnet, daß das zweite Zugmittelgetriebe ebenfalls über eine Umlenkrolle (89) spannbar ist, die auf einem gegen die Wirkung einer Feder (95) verschwenkbaren Tragarm (91) angeordnet ist.

12. Antriebsvorrichtung nach einem oder mehreren der vorherigen Ansprüche, dadurch gekennzeichnet, daß das erste und zweite Zugmittelgetriebe (67) über eine stufenlos einstellbare Doppelriemenscheibe (73, 77, 75) antriebsverbunden sind.

13. Antriebsvorrichtung nach einem oder mehreren der vorherigen Ansprüche, dadurch gekennzeichnet, daß das Bremspedal (21) über ein Bremsgestänge (123) an einen mit dem Getriebe - (27) verbundenen Bremshebel (125) gelenkig angeschlossen ist.

FIG. 1

FIG. 4

FIG. 2

FIG. 3

Europäisches
Patentamt

# EUROPÄISCHER RECHERCHENBERICHT

Nummer der Anmeldung

EP 86 11 0024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 027 513 (INDUS WHEEL CO.)<br><br>* Zusammenfassung; Figuren 2,5-8; Seite 3, Zeile 34 - Seite 11, Zeile 14 * <br>--- | 1-3,7-19,12,13 | A 01 D 34/64<br>A 01 D 69/00 |
| A | US-A-3 128 636 (GRAYBILL)<br>* Figuren 1,2; Spalte 2, Zeile 3 - Spalte 5, Zeile 35 *<br>--- | 1,2,12 | |
| A | US-A-4 132 121 (CLARKE)<br><br>* Figuren 2-7,10-15; Zusammenfassung; Spalte 4, Zeile 29 - Spalte 8, Zeile 17; Spalte 8, Zeile 61 - Spalte 12, Zeile 40 *<br><br>--- | 1,2,7,12 | |
| A | US-A-4 128 017 (CLARKE)<br><br>* Figuren 2-7; Zusammenfassung; Spalte 3, Zeile 62 - Spalte 8, Zeile 36 *<br><br>----- | 1,2,7,12,13 | RECHERCHIERTE SACHGEBIETE (Int. Cl.4)<br><br>A 01 D<br>F 16 H |

Der vorliegende Recherchenbericht wurde für alle Patentansprüche erstellt.

| Recherchenort | Abschlußdatum der Recherche | Prüfer |
|---|---|---|
| DEN HAAG | 08-12-1986 | DISSEN H.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82